# EUROPÄISCHE PATENTSCHRIFT

(11) **EP 2 181 261 B1**
(45) Veröffentlichungstag und Bekanntmachung des Hinweises auf die Patenterteilung: **16.11.2016**
(21) Anmeldenummer: 08801579.7
(22) Anmeldetag: 14.08.2008
(51) Int. Cl.: F02D 41/02, F02D 41/14, B62D 5/04, F02P 5/15

(54) **VERFAHREN UND BORDNETZ EINES KRAFTFAHRZEUGS MIT VORAUSSCHAUENDEM TEMPORÄREN MOMENTENVORHALT DES VERBRENNUNGSMOTORS**
METHOD AND VEHICLE ELECTRIC SYSTEM WITH ANTICIPATED TEMPORARY LEAD TORQUE FOR THE INTERNAL COMBUSTION ENGINE
PROCÉDÉ ET RÉSEAU ÉLECTRIQUE DE BORD D'UN VÉHICULE À MOTEUR AVEC ÉCART TEMPORAIRE ANTICIPÉ DU COUPLE DU MOTEUR THERMIQUE

(30) Priorität: 30.08.2007 DE 102007040905
(43) Veröffentlichungstag der Anmeldung: 05.05.2010
(73) Patentinhaber: Bayerische Motoren Werke Aktiengesellschaft, 80809 München (DE)
(72) Erfinder: HERZOG, Torsten, 80803 München (DE); LEMKE, Olaf, 80995 München (DE); HAUSCHILD, Martin, 81249 München (DE)
(86) Internationale Anmeldenummer: PCT/EP2008/006681
(87) Internationale Veröffentlichungsnummer: WO 2009/030349

(56) Entgegenhaltungen:
- WO-A-2007/036386
- DE-A1- 10 216 184
- DE-A1- 10 324 958
- DE-A1- 10 333 603
- DE-A1- 10 360 666
- DE-A1- 19 919 682
- DE-A1- 19 931 144

## Beschreibung

Die Erfindung betrifft insbesondere ein Verfahren zur Reduzierung des Energieverbrauchs eines Kraftfahrzeugs mit mindestens einem elektrischen Bordnetz an das mindestens ein elektrischer Verbraucher angeschlossen ist. Die Anzahl der elektrischen Verbraucher in Kraftfahrzeugen hat erheblich zugenommen. Um den CO₂- Ausstoß im Fahrzeug zu reduzieren, werden hydraulisch arbeitende Verbraucher durch elektrische Verbraucher ersetzt. So ersetzt ggf. beispielsweise eine elektrische Lenkung (EPS) eine hydraulische Lenkung des Kraftfahrzeugs. Eine hydraulische Lenkung und die dynamische Kompensation von Lastanforderungen der Lenkvorrichtung ist z.B. durch die DE 103 24 958 offenbart, Solche elektrischen Verbraucher können jedoch kurzzeitig eine hohe Leistungsanforderung an das Fahrzeugbordnetz stellen. Daraus resultiert auch eine hohe Anforderung an die Bordnetzstabilität des Kraftfahrzeugs. Insbesondere muss bei kurzzeitig auftretenden hohen Belastungen eine ausreichend hohe elektrische Spannung bzw. elektrische Leistung zur Verfügung stehen.

Aufgabe der Erfindung ist es, ein Verfahren anzugeben, dass die Realisierung eines leistungsfähigen Bordnetzes und zudem die Reduzierung des Energieverbrauchs eines Kraftfahrzeugs ermöglicht.

Diese Aufgabe wird durch ein Verfahren bzw. ein Bordnetz mit den Merkmalen des betreffenden unabhängigen Anspruchs gelöst. Vorteilhafte Ausgestaltungen der Erfindung sind Gegenstand der abhängigen Patentansprüche.

Ein Aspekt der Erfindung besteht darin, dass der Verbrennungsmotor in einem ersten Betriebszustand mit einer ersten Einspritzmenge und mit einem ersten Zündzeitpunkt betrieben wird. Beispielsweise versorgen der elektrische Generator des Fahrzeugs und die Batterie des Fahrzeugs das Bordnetz gemeinsam, um die elektrischen Verbraucher mit einer ausreichenden elektrischen Spannung zu versorgen. Der Generator kann in dem ersten Betriebszustand voll ausgelastet sein.

In einem zweiten Betriebszustand wird der Verbrennungsmotor mit einer zweiten gegenüber der ersten Einspritzmenge höheren Einspritzmenge und mit einem zweiten Zündzeitpunkt betrieben. Der zweite Zündzeitpunkt ist ggü. dem ersten Zündzeitpunkt bei der zweiten Einspritzmenge in Bezug auf das Leistungsvermögen des Verbrennungsmotors ungünstiger. Die zweite ggü. der ersten Einspritzmenge höhere Einspritzmenge steigert an sich das Leistungsvermögen des Verbrennungsmotors und ermöglicht dem Verbrennungsmotor an sich ein höheres Drehmoment an den elektrischen Generator des Kraftfahrzeugs abzugeben. Ohne Gegenmaßnahme erhöht sich - überraschend für den Fahrer - die Drehzahl des Verbrennungsmotors, so dass der Fahrer den Eindruck gewinnen würde, dass ein Defekt vorliegt. Um diese Drehmomentsteigerung zu kompensieren, wird erfindungsgemäß im zweiten Betriebszustand der Zündzeitpunkt vom ersten Zündzeitpunkt zu einem zweiten Zündzeitpunkt verstellt, wodurch die Leistungsfähigkeit des Verbrennungsmotors bzw. sein Drehmoment vorzugsweise im Wesentlichen in dem Maße reduziert wird, wie sein Drehmoment durch die Erhöhung der Einspritzmenge erhöht worden ist. Das Ergebnis des zweiten Betriebszustands ist ein Momentenvorhalt des Verbrennungsmotors und die Drehzahl des Motors bleibt beim Übergang von dem ersten Betriebszustand in den zweiten Betriebszustand weitgehend konstant.

In einem dritten Betriebszustand wird der Verbrennungsmotor mit der zweiten Einspritzmenge und weitgehend dem ersten Zündzeitpunkt betrieben, so dass das Leistungsvermögen bzw. Drehmoment des Verbrennungsmotors im dritten Betriebszustand ggü. dem zweiten Betriebszustand höher ist.

Eine im Fahrzeug vorgesehene Fahrsituations-Erfassungseinrichtung erkennt eine weitgehend unmittelbar bevorstehende besondere Fahrsituation aufgrund des bisherigen Verhaltens des Fahrers beim Steuern des Fahrzeugs und/oder des Fahrzeugs im Voraus und veranlasst, dass die Verbrennungsmaschine vom ersten Betriebszustand in den zweiten Betriebszustand gebracht wird. Mit dem Erkennen einer weitgehend unmittelbar bevorstehenden besonderen Fahrsituation wird erfindungsgemäß also ein Momentenvorhalt des Verbrennungsmotors durch eine Erhöhung der Einspritzmenge herbeigeführt, der der Stabilisierung der Bordnetzspannung dient, wenn diese in Kürze tatsächlich erforderlich wird.

Bei einer Ausführungsform der Erfindung ist vorgesehen, dass der elektrische Verbraucher eine elektrisch betätigte Lenkung oder ein Fahrwerksregel- oder Fahrwerksunterstützungssystem des Kraftfahrzeugs ist und die weitgehend unmittelbar bevorstehende besondere Fahrsituation ein Park- und/oder Rangiervorgang ist. Dies ist eine Fahrsituation bei der sich eine niedrige elektrische Spannung im Bordnetz besonders unangenehm für den Fahrer bemerkbar machen kann.

Bei bekanten Bordnetzen wird beim Einschalten eines elektrischen Verbrauchers, der das Bordnetz in stärkerem Maße belastet, wie eine elektrische Lenkung, eine Verzögerung der Belastung des elektrischen Generators herbeigeführt. Dies geschieht, indem der Verbraucher zunächst aus der Fahrzeugbatterie und nachfolgend in zunehmendem Maße von dem Generator gespeist wird. Typischerweise dauert dieser Vorgang, die sog. Load-Response, einige Sekunden. Durch diese Verzögerung werden stärkere Drehzahlschwankungen des Verbrennungsmotors bei Einschalten von Verbrauchern mit hohem Strombedarf vermieden.

Bei einer bevorzugten Ausführungsform der Erfindung ist vorgesehen, dass auch eine größere elektrische Belastung des Bordnetzes insbesondere im dritten Betriebszustand des Verbrennungsmotors weitgehend ohne Verzögerung an den elektrischen Generator des Fahrzeugs weitergegeben wird. Bei dieser bevorzugten Ausführungsform wird also, insbesondere im dritten Betriebszustand, kein sog. Load-Response-Vorgang vorgenommen.

Bei einem bevorzugten Ausführungsbeispiel der Erfindung ist vorgesehen, dass die Fahrsituations-Erfassungseinrichtung bei Erkennen der besonderen Fahrsituation veranlasst, dass die Verbrennungsmaschine vom zweiten in den dritten Betriebszustand gebracht wird. Aufgrund des erfindungsgemäßen Momentenvorhalts im zweiten Betriebszustand kann durch die technisch sehr schnell zu realisierende Verstellung des Zündzeitpunkts beim Übergang zum dritten Betriebszustand das vom Verbrennungsmotor vorgehaltene Drehmoment sehr kurzfristig bereitgestellt werden. Der Verbrennungsmotor stirbt nicht ab und er kann das erforderliche Drehmoment an den elektrischen Generator abgegeben. Der elektrische Generator kann eine höhere elektrische Leistung in das Bordnetz einspeisen und die elektrische Spannung wird stabilisiert bzw. bricht trotz einer plötzlich auftretenden höheren Last im Bordnetz nicht ein.

Bei einer Ausgestaltung der Erfindung ist vorgesehen, dass die Fahrsituations-Erfassungseinrichtung das (tatsächliche) Eintreten der besonderen Fahrsituation daran erkennt, dass die elektrische Spannung des Bordnetzes im Begriff ist einzubrechen. Eine Überwachung der Spannung und ggf. eine Drehmoment steigernde Verstellung des Zündwinkels ist technisch verhältnismäßig einfach und kostengünstig zu realisieren.

Bei einer Ausführungsform der Erfindung ist vorgesehen, dass die Fahrsituations-Erfassungseinrichtung berücksichtigt, wer der aktuelle Fahrer ist und wie sein früheres Verhalten war. Der aktuelle Fahrer kann insbesondere anhand des von ihm verwendeten Fahrzeugschlüssels erkannt werden. Hierdurch kann die Trefferquote für die Voraussage, dass ein Park- und/oder Rangiervorgang bevorsteht erhöht werden. Erkennt die Fahrsituations-Erfassungseinrichtung beispielsweise, dass der betreffende Fahrer stets eine charakteristische Vorgehensweise zeigt, erhöht dies die Trefferquote zur Erkennung eines bevorstehenden Park- und/oder Rangiervorgangs.

Bei einer ersten Ausgestaltung der Erfindung ist vorgesehen, dass von der Fahrsituations-Erfassungseinrichtung erfasst wird, ob die Geschwindigkeit des Fahrzeugs einen vorbestimmten Schwellenwert unterschreitet, ob der Rückwärtsgang eingelegt ist und ob die Differenz zwischen dem Absolutwert des aktuellen Lenkwinkels und dem Absolutwert des Lenkwinkels zu einem früheren Zeitpunkt größer als ein vorbestimmter Schwellenwert ist. Ggf. wird erfindungsgemäß veranlasst, dass die Verbrennungsmaschine vom ersten Betriebszustand in den zweiten Betriebszustand gebracht wird und es wird davon ausgegangen, dass ein so genannter "Rücklenken-Vorgang" eingetreten ist, der eine erste von erfindungsgemäß drei Alternativen zur Einleitung eines Park- und/oder Rangiervorgangs darstellt.

Bei einer zweiten Ausgestaltung der Erfindung ist vorgesehen, dass von der Fahrsituations-Erfassungseinrichtung erfasst wird, ob die Geschwindigkeit des Fahrzeugs einen vorbestimmten Schwellenwert unterschreitet, ob die Geschwindigkeit des Fahrzeugs den Schwellenwert für einen vorgegebenen Zeitraum unterschreitet und ob die Differenz zwischen dem Absolutwert des aktuellen Lenkwinkels und dem Absolutwert eines vorbestimmten Lenkwinkel-Schwellenwerts größer als ein vorbestimmter Schwellenwert ist. Ggf. wird erfindungsgemäß veranlasst, dass die Verbrennungsmaschine vom ersten Betriebszustand in den zweiten Betriebszustand gebracht wird und es wird davon ausgegangen, dass ein so genannter "Umlenken-Vorgang" eingetreten ist, der eine zweite von erfindungsgemäß drei Alternativen zur Einleitung eines Park- und/oder Rangiervorgangs darstellt.

Bei einer dritten Ausgestaltung der Erfindung ist vorgesehen, dass von der Fahrsituations-Erfassungseinrichtung erfasst wird, ob der Rückwärtsgang eingelegt ist, ob die Geschwindigkeit des Fahrzeugs einen vorbestimmten Schwellenwert unterschreitet, ob die Differenz zwischen dem Absolutwert des aktuellen Lenkwinkels und dem Absolutwert des Lenkwinkels zu einem früheren Zeitpunkt größer als ein vorbestimmter Schwellenwert ist, ob die Geschwindigkeit des Fahrzeugs den vorbestimmten Schwellenwert für einen vorgegebenen Zeitraum unterschreitet und ob der Lenkwinkel größer als ein vorbestimmter Schwellenwert ist. Ggf. wird erfindungsgemäß veranlasst, dass die Verbrennungsmaschine vom ersten Betriebszustand in den zweiten Betriebszustand gebracht wird und es wird davon ausgegangen, dass ein so genannter "Standlenken-Vorgang" eingetreten ist, der die dritte von erfindungsgemäß drei Alternativen zur Einleitung eines Park- und/oder Rangiervorgang darstellt.

Die Erfindung schlägt zudem ein Bordnetz eines Kraftfahrzeugs vor, das eine programmgesteuerte Fahrsituations-Erfassungseinrichtung aufweist, die ein erfindungsgemäßes Verfahren ausführt. Ferner wird eine programmgesteuerte Fahrsituations-Erfassungseinrichtung vorgeschlagen, die ein erfindungsgemäßes Verfahren ausführt oder deren Ausführung veranlasst.

Das erfindungsgemäße Verfahren wird nachfolgend anhand von Ablaufplänen am Beispiel eines Park- bzw. Rangiervorgangs näher erläutert. Gleiche Bezugszeichen zeigen gleiche oder gleich wirkende Funktionen. Es zeigen:
- Fig. 1: einen Ablaufplan des erfindungsgemäßen Verfahrens mit drei parallel zueinander ablaufenden Algorithmen, die jeweils einen bevorstehenden Park- bzw. Rangiervorgang in einer spezifischen Ausprägung erkennen;
- Fig. 2: den ersten der drei parallel ablaufenden Algorithmen zur Erkennung eines bevorstehenden Park- bzw. Rangiervorgangs;
- Fig. 3: den zweiten der drei parallel ablaufenden Algorithmen zur Erkennung eines bevorstehenden Park- bzw. Rangiervorgangs; und
- Fig. 4: den dritten der drei parallel ablaufenden Algorithmen zur Erkennung eines bevorstehenden Park- bzw. Rangiervorgangs.

Der Ausgangspunkt für das erfindungsgemäße Verfahren ist der Folgende. Das Kraftfahrzeug ist mit einer elektrischen Lenkung oder einem Fahrwerksregel- und/oder Fahrwerksunterstützungssystem ausgestattet. Die elektrische Lenkung benötigt bei der manuellen Durchführung eines Parkmanövers bzw. eines Park- oder Rangiervorgangs eine ausreichend hohe elektrische Spannung. Wird das Parkmanöver aus Gründen einer CO₂-Reduzierung beim Betrieb des Kraftfahrzeugs bei einer abgesenkten Bordnetzspannung durchgeführt, ist die Lenkung schwergängig. Dies ist für den Fahrer, insbesondere bei einem schnell auszuführenden Park- bzw. Rangiermanöver, unangenehm. Durch das erfindungsgemäße Verfahren kann das unmittelbare Bevorstehen eines Parkmanövers sehr zuverlässig erkannt, die elektrische Bordnetz-Spannung dann kurz vor dem Parkmanöver bis kurz nach dem Parkmanöver erhöht und dann wieder zur erneuten CO₂-Reduzierung abgesenkt werden.

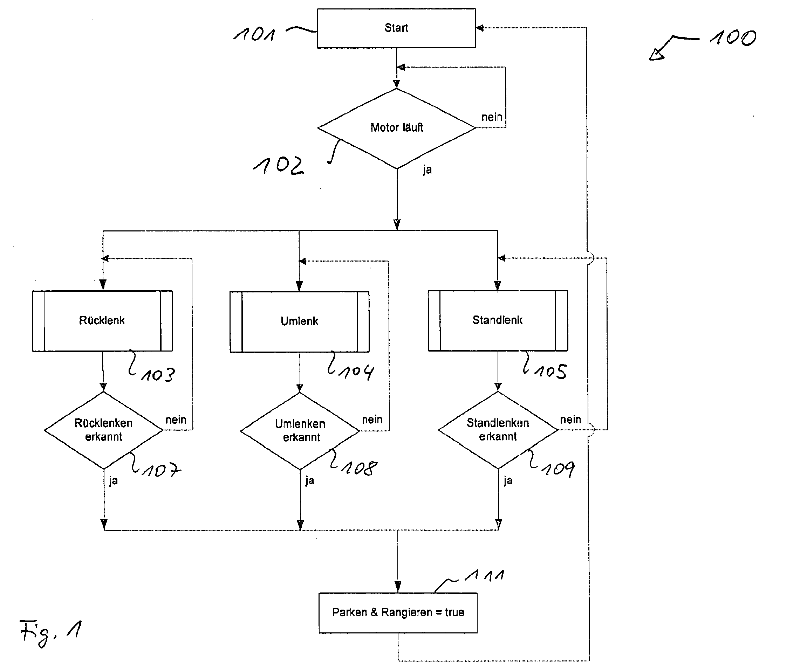

Figur 1 zeigt einen Ablaufplan 100 des erfindungsgemäßen Verfahrens mit drei parallel zueinander ablaufenden Algorithmen 103, 104, und 105, die jeweils einen bevorstehenden Park- bzw. Rangiervorgang in einer spezifischen Ausprägung erkennen. Das erfindungsgemäße Verfahren 100 beginnt mit dem Start-Schritt 101. Im Schritt 102 wird überprüft, ob der Motor des Fahrzeugs läuft. Falls nein, wird der Schritt erneut ausgeführt. Falls ja, werden die Algorithmen 103 "Rücklenk" zur Erkennung eines Rücklenken-Vorgangs, der Algorithmus 104 "Umlenk" zur Erkennung eines Umlenken-Vorgangs, und der Algorithmus 105 "Standlenk" zur Erkennung eines Standlenken-Vorgangs jeweils parallel zueinander ausgeführt.

Wird im Rahmen des Rücklenk-Algorithmus 103 ein Rücklenken im Schritt 107 erkannt, geht das erfindungsgemäße Verfahren von einem bevorstehenden oder bereits stattfindenden Park- und/oder Rangiervorgang aus (Schritt 111 "Parken & Rangieren = true) und die Versorgungsspannung wird temporär für die Dauer des Park- und/oder Rangiervorgangs auf das zweite höhere Niveau gebracht. Wird im Rahmen des Umlenk-Algorithmus 104 ein Umlenken im Schritt 108 erkannt, geht das erfindungsgemäße Verfahren von einem bevorstehenden oder bereits stattfindenden Park- und/oder Rangiervorgang aus (Schritt 111 "Parken & Rangieren = true) und die Versorgungsspannung wird temporär für die Dauer des Park- und/oder Rangiervorgangs auf das zweite höhere Niveau gebracht. Wird im Rahmen des Standlenk-Algorithmus 105 ein Standlenken im Schritt 109 erkannt, geht das erfindungsgemäße Verfahren von einem bevorstehenden oder bereits stattfindenden Park- und/oder Rangiervorgang aus (Schritt 111 "Parken & Rangieren = true) und die Versorgungsspannung wird temporär für die Dauer des Park- und/oder Rangiervorgangs auf das zweite höhere Niveau gebracht.

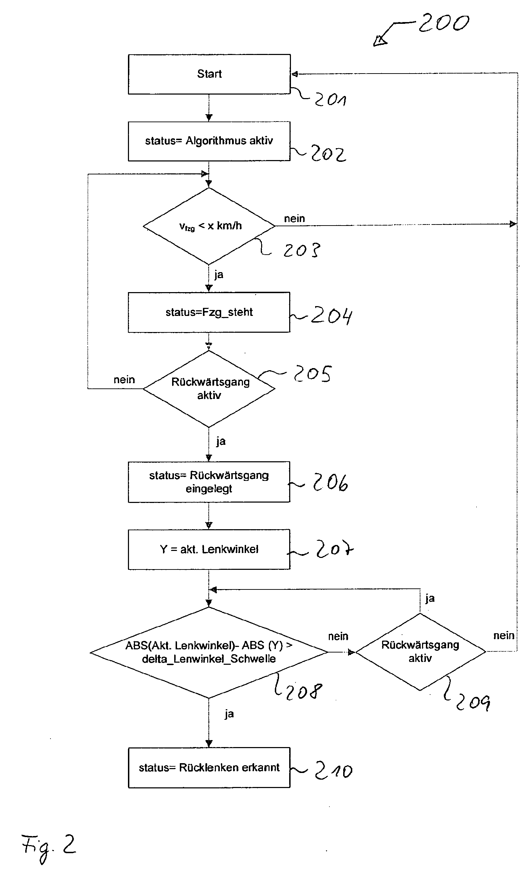

Fig. 2 zeigt anhand des Ablaufplans 200 detailliert den ersten Algorithmus 103 zur Erkennung eines Rücklenken-Vorgangs. Nach dem Start des Algorithmus im Schritt 201 ist dieser aktiv (Schritt 202) zur Überwachung, ob ein Rücklenken-Vorgang vorliegt. Im Schritt 203 wird ermittelt, ob die Fahrzeuggeschwindigkeit V_{fzg} kleiner als eine vorbestimmte Geschwindigkeit x km/h ist. Ist V_{fzg} größer als x km/h so läuft der Vergleichs-Schritt 202 weiterhin ab. Ist die Fahrzeuggeschwindigkeit V_{fzg} kleiner als die vorbestimmte Geschwindigkeit x km/h gilt dies als Status 204, d.h. das Fahrzeug gilt als stehend. Im Schritt 205 wird dann überprüft, ob der Rückwärtsgang aktiv ist bzw. ob er eingelegt ist. Ggf. gilt dies als Status 205, d.h. der Rückwärtsgang gilt als eingelegt, und es folgt der Schritt 207. Im Schritt 207 wird der aktuelle Lenkwinkel des Fahrzeugs ermittelt und der Variablen y wird dieser Lenkwinkel zugewiesen. Im Schritt 208 wird überprüft,, ob die Differenz zwischen dem Absolutwert des nun aktuellen Lenkwinkels und dem Absolutwert des vorherigen Lenkwinkels größer als ein vorbestimmter Lenkwinkelschwellenwert ist, d.h. Abs (akt. Lenkwinkel) -Abs (y) > delta_Lenkwinkel-Schwelle. Ggf. gilt dies als Rücklenken erkannt (Status 210). Anderenfalls wird im Schritt 209 erneut geprüft, ob der Rückwärtsgang aktiv bzw. eingelegt ist und ggf. wird die Überprüfung im Schritt 208 wiederholt. Ist der Rückwärtsgang im Schritt 209 nicht eingelegt, beginnt der Algorithmus erneut mit dem Start-Schritt 201. Anders ausgedrückt, wird also im Schritt 208 überprüft, ob ein deutlicher Lenkausschlag vorgenommen wird. Gilt Rücklenken als erkannt (Status 210), wird die Verbrennungsmaschine des Kraftfahrzeugs temporär bzw. für die Dauer des Park- und/oder Rangiervorgangs vom ersten Betriebszustand in den zweiten Betriebszustand gebracht.

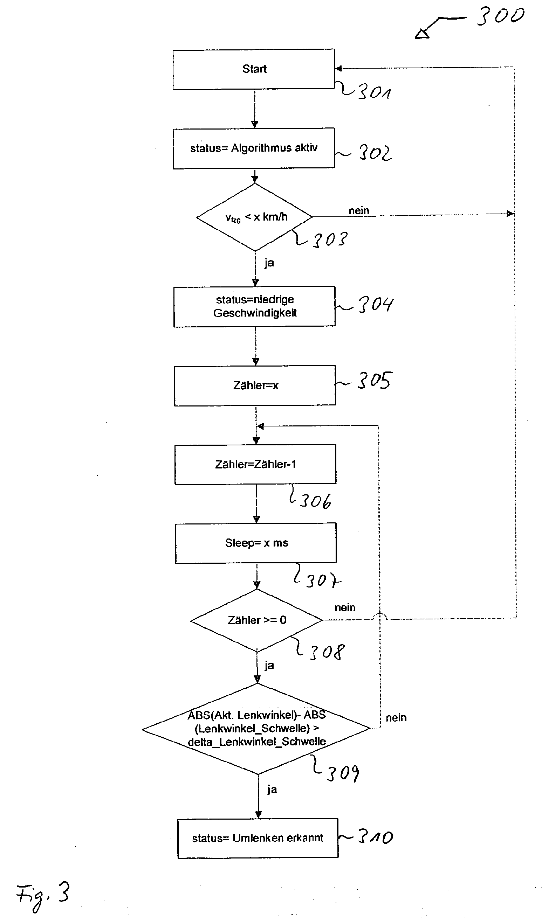

Fig. 3 zeigt anhand des Ablaufplans 300 detailliert den zweiten Algorithmus 104 zur Erkennung eines Umlenken-Vorgangs. Nach dem Start des Algorithmus im Schritt 301 ist dieser aktiv zur Überwachung (Schritt 202), ob ein Rücklenken-Vorgang vorliegt. Im Schritt 303 wird überprüft, ob die Fahrzeuggeschwindigkeit V_{fzg} kleiner als eine vorbestimmte Geschwindigkeit x km/h ist. Ist v_{fzg} größer als x km/h so läuft der Vergleichs-Schritt 303 weiterhin ab. Ist die Fahrzeuggeschwindigkeit v_{fzg} kleiner als die vorbestimmte Geschwindigkeit x km/h gilt dies als Status 304, d.h. das Fahrzeug gilt als ein Fahrzeug mit niedriger Geschwindigkeit. Im Schritt 305 wird ein Zähler mit einem vorbestimmten Zählerstand x gesetzt. Im Schritt 306 wird der Zählerstand um 1 reduziert und im Schritt 307 wird eine vorbestimmte Pause von x ms (sleep= x ms) eingefügt. Nach der vorbestimmten Pause wird im Schritt 308 überprüft, ob der Zählerstand größer oder gleich Null ist. Falls nein, werden die Schritte 306, 307 und 308 erneut durchlaufen. Falls ja, wird im Schritt 309 überprüft, ob die Differenz zwischen dem Absolutwert des aktuellen Lenkwinkels und dem Absolutwert eines vorbestimmten Lenkwinkelschwellenwerts größer als ein vorbestimmter Differenz-Lenkwinkelschwellenwert ist, d.h. Abs (aktueller Lenkwinkel) - Abs (Lenkwinkel-Schwellenwert) > Delta-Lenkwinkel-Schwellenwert. Falls nein, werden die Schritte 306, 307 und 308 erneut durchlaufen. Falls ja, gilt der Status 310 "Umlenken erkannt" als gegeben. Gilt Umlenken als erkannt (Status 310), wird die Verbrennungsmaschine des Kraftfahrzeugs temporär bzw. für die Dauer des Park- und/oder Rangiervorgangs vom ersten Betriebszustand in den zweiten Betriebszustand gebracht.

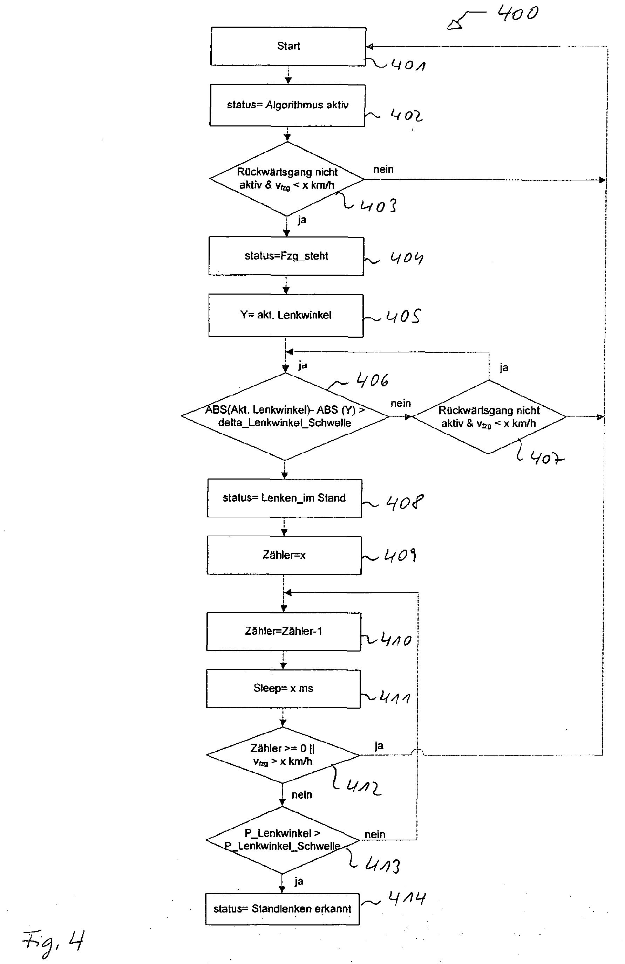

Fig. 4 zeigt anhand des Ablaufplans 400 detailliert den dritten Algorithmus 105 zur Erkennung eines Standlenken-Vorgangs. Nach dem Start des Algorithmus im Schritt 401 ist dieser aktiv zur Überwachung (Schritt 402), ob ein Standlenken-Vorgang vorliegt. Im Schritt 403 wird überprüft, ob der Rückwärtsgang nicht aktiv bzw. eingelegt ist und ob die Geschwindigkeit v_{fzg} kleiner als eine vorbestimmte Geschwindigkeit x km/h ist. Falls eines der Kriterien oder beide Kriterien nicht erfüllt sind, läuft der Vergleichs-Schritt 403 erneut ab. Sind beide Kriterien des Schritts 403 erfüllt, gilt der Status 404 "Fahrzeug steht" als gegeben. Im Schritt 405 wird der Wert einer Variablen y auf den aktuellen Wert des Lenkwinkels des Fahrzeugs gesetzt. Im Schritt 406 wird überprüft, ob die Differenz zwischen dem Absolutwert des derzeit aktuellen Lenkwinkels und dem Absolutwert des vorherigen Lenkwinkels. bzw. dem Absolutwert der Variablen y größer als ein vorbestimmter Differenz-Lenkwinkel-Schwellenwert ist, d.h. Abs (aktueller Lenkwinkel) - Abs (y) > Delta-Lenkwinkel-Schwellenwert. Falls nein, wird im Schritt 407 überprüft, ob der Rückwärtsgang nicht aktiv ist und ob die Fahrzeuggeschwindigkeit kleiner als die vorbestimmte Geschwindigkeit x km/h ist (vgl. Schritt 403). Falls eines der Kriterien oder beide der Kriterien nicht erfüllt sind, beginnt der Ablauf erneut mit Schritt 401. Sind beide Kriterien erfüllt, wird der Schritt 406 erneut durchgeführt. Ist das Ergebnis des Vergleichs in Schritt 406 "ja", gilt der Status 408 "Lenken im Stand" als gegeben. Im Schritt 409 wird ein Zähler auf einen vorbestimmten Zählerstand x gesetzt. Im Schritt 410 wird der Zähler um den Wert "1" reduziert. Im Schritt 411 wird eine vorbestimmte Pause von x ms gemacht. Nach Ende der Pause "Sleep= x ms" wird im Schritt 412 überprüft, ob der Zählerstand größer oder gleich Null ist und ob die Fahrzeuggeschwindigkeit größer als eine vorgegebene Geschwindigkeit ist. Falls ja, beginnt der Ablauf erneut mit dem Schritt 401. Falls nein, wird im Schritt 413 überprüft, ob die aktuell vom Fahrzeug bereitgestellte Leistung zur Lenkunterstützung (P_Lenkwinkel) größer als ein vorgegebener Lenkleistungs-Schwellenwert (P_Lenkwinkel_Schwelle) ist. Der Schwellenwert liegt bevorzugt in einem Bereich, der oberhalb der typischen Leistung für Lenkbewegungen im ersten Betriebszustand und unterhalb der Maximalleistung für Lenkbewegungen im ersten Betriebszustand liegt. Falls nein, wird der Ablauf mit dem Schritt 410 fortgesetzt. Falls ja, gilt der Status "Standlenken erkannt" als gegeben und die Verbrennungsmaschine des Kraftfahrzeugs wird temporär bzw. für die Dauer des Park- und/oder Rangiervorgangs vom ersten Betriebszustand in den zweiten Betriebszustand gebracht.

Das Rückschalten in den ersten Betriebszustand erfolgt bei laufendem Motor bevorzugt nach einem vorbestimmten Zeitraum, vorzugsweise ca. 3 Minuten, nach dem Umschalten in den dritten Betriebszustand.

Wird der Motor des Fahrzeugs vor Ablauf des vorbestimmten Zeitraums ausgeschaltet, erfolgt bevorzugt unmittelbar danach das Rückschalten in den ersten Betriebszustand. Nach einem anschließenden Motorstart erfolgt bevorzugt unmittelbar ein Umschalten in den dritten Betriebszustand. Das Rückschalten in den ersten Betriebszustand erfolgt dann bevorzugt nicht erst nach dem Ablauf des vorbestimmten Zeitraums, sondern bereits nach dem Ablauf des Zeitraums, der beim Abschalten des Motors noch nicht verstrichen war.

Das Rückschalten in den ersten Betriebszustand erfolgt bevorzugt zudem dann, wenn die seit der Umschaltung in den dritten Betriebszustand von dem Fahrzeug zurückgelegte Wegstrecke größer als eine vorbestimmte Wegstrecke ist, vorzugsweise ca. 50 m, oder wenn die Geschwindigkeit des Fahrzeugs eine vorbestimmte Geschwindigkeit überschreitet, vorzugsweise ca. 30 km/h.

Eine entsprechende Ablaufsteuerung (nicht dargestellt) veranlasst die beschriebenen Vorgänge des Rückschaltens etc. selbsttätig.

Es versteht sich, dass die Erfindung auch in einer Ausführungsform ausgeführt werden kann, bei der nur ein Teil der Algorithmen 103, 104 und 105 ausgeführt wird.

## Patentansprüche

1. Verfahren zur Reduzierung des Energieverbrauchs eines Kraftfahrzeugs mit einem Verbrennungsmotor und mindestens einem elektrischen Verbraucher, wobei,
- der Verbrennungsmotor in einem ersten Betriebszustand mit einer ersten Einspritzmenge und mit einem ersten Zündzeitpunkt betrieben wird,
- der Verbrennungsmotor in einem zweiten Betriebszustand mit einer zweiten gegenüber der ersten Einspritzmenge höheren Einspritzmenge und mit einem zweiten Zündzeitpunkt betrieben wird, wobei der zweite Zündzeitpunkt ggü. dem ersten Zündzeitpunkt bei der zweiten Einspritzmenge in Bezug auf das Leistungsvermögen des Verbrennungsmotors ungünstiger ist,
- der Verbrennungsmotor in einem dritten Betriebszustand mit der zweiten Einspritzmenge und weitgehend dem ersten Zündzeitpunkt betrieben wird, so dass das Leistungsvermögen des Verbrennungsmotors im dritten Betriebszustand ggü. dem zweiten Betriebszustand höher ist, und
- eine im Fahrzeug vorgesehene Fahrsituations-Erfassungseinrichtung (103, 104 und 105) eine weitgehend unmittelbar bevorstehende besondere Fahrsituation aufgrund des bisherigen Verhaltens des Fahrers beim Steuern des Fahrzeugs und/oder des Fahrzeugs im Voraus erkennt, **dadurch gekennzeichnet, dass**
- der elektrische Verbraucher eine elektrisch betätigte Lenkung und die weitgehend unmittelbar bevorstehende besondere Fahrsituation ein Park- und/oder Rangiervorgang ist,
- von der Fahrsituations-Erfassungseinrichtung (103, 200) erfasst wird, ob die Geschwindigkeit des Fahrzeugs einen vorbestimmten Schwellenwert unterschreitet (203), ob der Rückwärtsgang eingelegt ist (205) und ob die Differenz zwischen dem Absolutwert des aktuellen Lenkwinkels und dem Absolutwert des Lenkwinkels zu einem früheren Zeitpunkt größer als ein vorbestimmter Schwellenwert ist (208) und
- die Verbrennungsmaschine ggf. vom ersten Betriebszustand in den zweiten Betriebszustand gebracht wird.

2. Verfahren nach Anspruch 1, **dadurch gekennzeichnet, dass** die Fahrsituations-Erfassungseinrichtung bei Erkennen der besonderen Fahrsituation veranlasst, dass die Verbrennungsmaschine vom zweiten in den dritten Betriebszustand gebracht wird.

3. Verfahren nach Anspruch 1, **dadurch gekennzeichnet, dass** die Fahrsituations-Erfassungseinrichtung das Eintreten der besonderen Fahrsituation daran erkennt, dass die elektrische Spannung des Bordnetzes im Begriff ist einzubrechen.

4. Verfahren nach einem der vorstehenden Ansprüche, **dadurch gekennzeichnet, dass** auch eine größere elektrische Belastung des Bordnetzes, insbesondere im dritten Betriebszustand des Verbrennungsmotors, weitgehend ohne Verzögerung an den elektrischen Generator des Fahrzeugs weitergegeben wird.

5. Verfahren nach Anspruch 1, **dadurch gekennzeichnet, dass** die Fahrsituations-Erfassungseinrichtung bei Erkennen der weitgehend unmittelbar bevorstehenden besonderen Fahrsituation veranlasst, dass die Verbrennungsmaschine anstelle des Übergangs vom ersten in den zweiten Betriebszustands veranlasst, dass die Verbrennungsmaschine direkt vom ersten in den dritten Betriebszustand gebracht wird.

6. Verfahren nach Anspruch 1, **dadurch gekennzeichnet, dass** die Fahrsituations-Erfassungseinrichtung berücksichtigt, wer der aktuelle Fahrer ist und wie sein früheres Verhalten war, wobei der aktuelle Fahrer insbesondere anhand des von ihm verwendeten Fahrzeugschlüssels erkannt wird.

7. Verfahren nach einem der vorstehenden Ansprüche, **dadurch gekennzeichnet, dass** von der Fahrsituations-Erfassungseinrichtung (104, 300) erfasst wird, ob die Geschwindigkeit des Fahrzeugs einen vorbestimmten Schwellenwert unterschreitet (303), ob die Geschwindigkeit des Fahrzeugs den Schwellenwert für einen vorgegebenen Zeitraum unterschreitet (308) und ob die Differenz zwischen dem Absolutwert des aktuellen Lenkwinkels und dem Absolutwert des Lenkwinkels zu einem früheren Zeitpunkt größer als ein vorbestimmter Schwellenwert ist (309) und die Verbrennungsmaschine ggf. vom ersten Betriebszustand in den zweiten Betriebszustand gebracht wird.

8. Verfahren nach einem der vorstehenden Ansprüche, **dadurch gekennzeichnet, dass** von der Fahrsituations-Erfassungseinrichtung (105, 400) erfasst wird, ob der Rückwärtsgang eingelegt ist und ob die Geschwindigkeit des Fahrzeugs einen vorbestimmten Schwellenwert unterschreitet (403), ob die Differenz zwischen dem Absolutwert des aktuellen Lenkwinkels und dem Absolutwert des Lenkwinkels zu einem früheren Zeitpunkt größer als ein vorbestimmter Schwellenwert ist (406), ob die Geschwindigkeit des Fahrzeugs den vorbestimmten Schwellenwert für einen vorgegebenen Zeitraum unterschreitet (412) und ob der Lenkwinkel größer als ein vorbestimmter Schwellenwert ist (413) und die Verbrennungsmaschine ggf. vom ersten Betriebszustand in den zweiten Betriebszustand gebracht wird.

9. Bordnetz eines Kraftfahrzeugs, **dadurch gekennzeichnet, dass** das Bordnetz eine programmgesteuerte Fahrsituations-Erfassungseinrichtung (100, 103 bis 105) aufweist, die ein Verfahren nach einem der vorstehenden Ansprüche ausführt.

10. Programmgesteuerte Fahrsituations-Erfassungseinrichtung, **dadurch gekennzeichnet, dass** die Fahrsituations-Erfassungseinrichtung (100, 103 bis 105) ein Verfahren nach einem der vorstehenden Ansprüche ausführt oder deren Ausführung veranlasst.

## Claims

1. A method for reducing the energy consumption of a motor vehicle having an internal combustion engine and at least one electrical consumer, wherein
- in a first operating mode, the internal combustion engine is operated with a first injected fuel quantity and with a first ignition timing,
- in a second operating mode, the internal combustion engine is operated with a second injected fuel quantity which is higher than the first injected fuel quantity and with a second ignition timing, the second ignition timing being less favourable than the first ignition timing in respect of the performance capability of the internal combustion engine with the second injected fuel quantity,
- in a third operating mode, the internal combustion engine is operated with the second injected fuel quantity and substantially with the first ignition timing so that the performance capability of the internal combustion engine in the third operating mode is higher than in the second operating mode,
- a driving situation detection device (103, 104 and 105) which is provided in the vehicle detects in advance a particular, substantially imminent driving situation based on the previous behaviour of the driver while steering the vehicle and/or of the vehicle, **characterised in that**
- the electrical consumer is an electrically actuated steering and the particular substantially imminent driving situation is a parking procedure and/or a manoeuvring procedure,
- the driving situation detection device (103, 200) detects whether the speed of the vehicle falls below a predetermined threshold value (203), whether the reverse gear has been engaged (205) and whether the difference between the absolute value of the current steering angle and the absolute value of the steering angle at an earlier time is greater than a predetermined threshold value (208) and
- the internal combustion engine is optionally brought into the second operating mode from the first operating mode.

2. A method according to claim 1, **characterised in that** upon detecting the particular driving situation, the driving situation detection device causes the internal combustion engine to be brought into the third operating mode from the second operating mode.

3. A method according to claim 1, **characterised in that** the driving situation detection device detects the occurrence of the particular driving situation from the fact that the electrical voltage of the vehicle electrical system is about to drop.

4. A method according to any one of the preceding claims, **characterised in that** a greater electrical loading of the vehicle electrical system, more especially in the third operating mode of the internal combustion engine, is also transmitted, substantially without delay, to the electrical generator of the vehicle.

5. A method according to claim 1, **characterised in that** when the driving situation detection device detects the particular imminent driving situation, it causes the internal combustion engine to be brought directly out of the first operating mode into the third operating mode instead of causing it to be brought out of the first operating mode into the second operating mode.

6. A method according to claim 1, **characterised in that** the driving situation detection device factors into consideration the identity of the current driver and the nature of the driver's previous behaviour, the current driver being recognised more especially on the basis of the vehicle key which he is using.

7. A method according to any one of the preceding claims, **characterised in that** the driving situation detection device (104, 300) detects whether the speed of the vehicle falls below a predetermined threshold value (303), whether the speed of the vehicle falls below the threshold value for a predetermined period of time (308) and whether the difference between the absolute value of the current steering angle and the absolute value of the steering angle at an earlier time is greater than a predetermined threshold value (309) and the internal combustion engine is optionally brought into the second operating mode from the first operating mode.

8. A method according to any one of the preceding claims, **characterised in that** the driving situation detection device (105, 400) detects whether the reverse gear has been engaged and whether the speed of the vehicle falls below a predetermined threshold value (403), whether the difference between the absolute value of the current steering angle and the absolute value of the steering angle at an earlier time is greater than a predetermined threshold value (406), whether the speed of the vehicle falls below the predetermined threshold value for a predetermined period of time (412) and whether the steering angle is greater than a predetermined threshold value (413) and the internal combustion engine is optionally brought into the second operating mode from the first operating mode.

9. An electrical system of a motor vehicle, **characterised in that** the vehicle electrical system has a program-controlled driving situation detection device (100, 103 to 105) which implements a method according to any one of the preceding claims.

10. A program-controlled driving situation detection device, **characterised in that** the driving situation detection device (100, 103 to 105) implements a method according to any one of the preceding claims or initiates the implementation thereof.

## Revendications

1. Procédé pour réduire la consommation d'énergie d'un véhicule automobile équipé d'un moteur à combustion interne et d'au moins un consommateur électrique, selon lequel
- le moteur à combustion interne fonctionne dans un premier état avec une première dose d'injection et un premier instant d'allumage,
- le moteur à combustion interne fonctionne dans un second état avec une seconde dose d'injection supérieure à la première dose d'injection et un second instant d'allumage, le second instant d'allumage étant moins avantageux que le premier instant d'allumage pour la seconde dose d'injection par rapport à la puissance que peut fournir le moteur à combustion interne,
- le moteur à combustion interne fonctionne dans un troisième état avec la seconde dose d'injection et en grande partie selon le premier instant d'injection de façon que la puissance du moteur à combustion interne dans le troisième état soit supérieure à celle du second état, et
- une installation de saisie d'état de conduite (103, 104 et 105) équipant le véhicule reconnait un état de conduite particulier qui est, dans une large mesure, directement en amont, et qui tient compte du comportement jusqu'alors du conducteur et/ou du véhicule, procédé **caractérisé en ce que**
- le consommateur électrique est une direction à commande électrique et l'état de conduite particulier qui, dans une très large mesure, est directement en amont, est une manoeuvre de stationnement et/ou de rangement,
- l'installation de saisie de l'état de circulation (103, 200) saisit ici la vitesse du véhicule qui passe en-dessous d'un seuil prédéfini (203), si la marche arrière est enclenchée (205) et si la différence entre la valeur absolue de l'angle de braquage actuel et la valeur absolue de l'angle de braquage un instant antérieur, est supérieure à un seuil prédéfini (208), et
- le moteur à combustion interne est mis dans le second état de fonctionnement le cas échéant à partir du premier état de fonctionnement.

2. Procédé selon la revendication 1,
**caractérisé en ce que**
l'installation de saisie de l'état de conduite en reconnaissant l'état de conduite particulier fait passer le moteur à combustion interne de son second à son troisième état de fonctionnement.

3. Procédé selon la revendication 1,
**caractérisé en ce que**
l'installation de saisie de l'état de conduite reconnait le passage dans l'état de conduite particulier **en ce que** la tension électrique du réseau embarqué est sur le point de s'effondrer.

4. Procédé selon l'une des revendications précédentes,
**caractérisé en ce qu'**
une charge électrique relativement importante du réseau embarqué, notamment dans le troisième état de fonctionnement du moteur à combustion interne est transmise pratiquement sans délai au générateur électrique du véhicule.

5. Procédé selon la revendication 1,
**caractérisé en ce que**
l'installation de saisie de l'état de conduite reconnaissant l'état de conduite particulier qui est dans une large mesure pratiquement immédiat, fait que le moteur à combustion interne au lieu de passer du premier au second état de fonctionnement fait passer le moteur à combustion interne directement du premier au troisième état de fonctionnement.

6. Procédé selon la revendication 1,
**caractérisé en ce que**
l'installation de saisie de l'état de conduite (50) tient compte du conducteur actuel et de son comportement antérieur, le conducteur actuel étant reconnu notamment par la clef de véhicule qu'il utilise.

7. Procédé selon l'une des revendications précédentes,
**caractérisé en ce que**
l'installation de saisie de l'état de conduite (104, 300) saisit si la vitesse du véhicule passe en-dessous d'un seuil prédéfini (303), si la vitesse du véhicule passe en-dessous du seuil pendant une durée prédéfinie (308) et si la différence entre la valeur absolue et l'angle de braquage actuel et la valeur absolue de l'angle de braquage a un instant antérieur est supérieure à un seuil prédéfini (309) et fait passer le moteur à combustion interne le cas échéant, du premier état de fonctionnement au second état de fonctionnement.

8. Procédé selon l'une des revendications précédentes,
**caractérisé en ce que**
l'installation de saisie de l'état de conduite (105, 400) saisit si la marche arrière est enclenchée et si la vitesse du véhicule passe en-dessous d'un seuil prédéfini (403), si la différence entre la valeur absolue de l'angle de braquage actuel et la valeur absolue de l'angle de braquage à un instant antérieur est supérieure à un seuil prédéfini (406), si la vitesse du véhicule reste en-dessous du seuil prédéfini pendant une durée prédéfinie (412) et si l'angle de braquage est supérieur à un seuil prédéfini (413) et si le moteur à combustion interne passe le cas échéant, du premier état de fonctionnement au second état de fonctionnement.

9. Réseau de bord d'un véhicule automobile,
**caractérisé en ce que**
le réseau de bord comporte une installation de saisie de l'état de conduite, commandée par programme (100, 103-105) qui exécute un procédé selon l'une des revendications précédentes.

10. Installation de saisie de l'état de conduite commandé par programme,
**caractérisé en ce que**
l'installation de saisie d'état de conduite (100, 103-105) exécute un procédé selon l'une des revendications précédentes ou demande son exécution.
